# EUROPEAN PATENT APPLICATION

(11) **EP 4 518 381 A1**
(43) Date of publication of application: **05.03.2025**
(21) Application number: 22943546.6
(22) Date of filing: 07.12.2022
(51) Int. Cl.: H04W 4/90

(54) **INTERFERENCE AVOIDANCE METHOD, SYSTEM AND APPARATUS, DEVICE, AND STORAGE MEDIUM**

(30) Priority: 24.05.2022 CN 202210572603
(71) Applicant: Rolling Wireless S.À R.L., 2540 Luxembourg (LU)
(72) Inventor: SUN, Wukui, Shenzhen, Guangdong 518055 (CN); CHEN, Huanjin, Shenzhen, Guangdong 518055 (CN)
(74) Representative: Cabinet Netter
(86) International application number: PCT/CN2022/137143
(87) International publication number: WO 2023/226359

(57) **Abstract**

Disclosed are an interference avoidance method, system and apparatus, a device, and a storage medium. **In** some embodiments, the interference avoidance method is applied to a communication device. The method comprises: obtaining, when data having a priority higher than a preset threshold needs to be transmitted, a working frequency band used for transmitting the data; determining an interference frequency band having an interference relationship with the working frequency band, and generating disabling information on the basis of the interference frequency band; and sending the disabling information to a user terminal in communication connection with the communication device, the disabling information being used for instructing the user terminal to disable the interference frequency band for data transmission.

## Description

### CROSS REFERENCE TO RELATED APPLICATION

The present disclosure claims priority to Chinese Patent Application No. 202210572603.3, filed on May 24, 2022 in China National Intellectual Property Administration and entitled "Interference Avoidance Method, System and Apparatus, Device, and Storage Medium", which is incorporated herein by reference in its entirety.

### FIELD

The present disclosure generally relates to the technical field of mobile communications, and more specifically relates to an interference avoidance method, system and apparatus, a device, and a storage medium.

### BACKGROUND

A vehicle automatically makes an emergency call when encountering a serious accident to call a rescue center and transmit some key data such as location information of the vehicle to the rescue center. In the 2G/3G era, the emergency call is made through a circuit switch (CS) domain of a cellular mobile network. As the cellular mobile network enters the 4G/5G era, the emergency call is made in a packet switch (PS) domain of the cellular mobile network. Compared to 2G/3G frequency bands, 4G/5G frequency bands receive more severe radio frequency interference from other communication technologies such as WIFI.

When the vehicle makes the emergency call, devices such as mobile phones carried by the driver and passengers interfere with the emergency call, resulting in decreased voice quality or transmission failure of location information. In areas with weaker signal strength, the consequences of the interference will become more severe.

### SUMMARY

In a first aspect, the present disclosure relates to an interference avoidance method applied to a communication devices, including:
obtaining, when data having a priority higher than a preset threshold needs to be transmitted, a working frequency band used for transmitting the data;
determining an interference frequency band having an interference relationship with the working frequency band, and generating disabling information on the basis of the interference frequency band; and
sending the disabling information to a user terminal in communication connection with the communication device, the disabling information being used for instructing the user terminal to disable the interference frequency band for data transmission.

In some embodiments, the obtaining, when data having a priority higher than a preset threshold needs to be transmitted, a working frequency band used for transmitting the data includes:
obtaining the working frequency band used for transmitting the data when an emergency call needs to be made.

In some embodiments, the determining an interference frequency band having an interference relationship with the working frequency band includes:
obtaining a target frequency band from a preset frequency band interference table, the target frequency band including the working frequency band, or a portion of the target frequency band belonging to the working frequency band; and
using the target frequency band as the interference frequency band.

In some embodiments, after the step of sending the disabling information to a user terminal in communication connection with the communication device, the method further includes:
sending enabling information to the user terminal after completing the transmission of the data having the priority higher than the preset threshold, the enabling information including the interference frequency band, and the enabling information being used for instructing the user terminal to restore using the interference frequency band for data transmission.

In a second aspect, the present disclosure relates to an interference avoidance method applied to a user terminal, including:
receiving disabling information from a communication device, the disabling information including an interference frequency band, and the disabling information being used for instructing the user terminal to disable the interference frequency band for data transmission;
determining whether the interference frequency band is being used for data transmission; and
pausing the data transmission when it is determined that the interference frequency band is being used for data transmission.

In some embodiments, the interference avoidance method further includes:
receiving enabling information from the communication device, the enabling information including the interference frequency band, and the enabling information being used for instructing the user terminal to restore using the interference frequency band for data transmission; and
restoring using the interference frequency band for data transmission.

In a third aspect, the present disclosure relates to an interference avoidance system, including:
a communication device and a user terminal;
where the communication device is configured to obtain, when data having a priority higher than a preset threshold needs to be transmitted, a working frequency band used for transmitting the data; determine an interference frequency band having an interference relationship with the working frequency band, and generate disabling information on the basis of the interference frequency band; and send the disabling information to the user terminal in communication connection with the communication device, the disabling information being used for instructing the user terminal to disable the interference frequency band for data transmission; and
the user terminal is configured to receive the disabling information from the communication device, the disabling information including the interference frequency band, and the disabling information being used for instructing the user terminal to disable the interference frequency band for data transmission; determine whether the interference frequency band is being used for data transmission; and pause the data transmission when it is determined that the interference frequency band is being used for data transmission.

In a fourth aspect, the present disclosure relates to an interference avoidance apparatus, including:
an obtaining module, configured to obtain, when data having a priority higher than a preset threshold needs to be transmitted, a working frequency band used for transmitting the data;
a generation module, configured to determine an interference frequency band having an interference relationship with the working frequency band, and generate disabling information on the basis of the interference frequency band; and
a sending module, configured to send the disabling information to a user terminal in communication connection with the communication device, the disabling information being used for instructing the user terminal to disable the interference frequency band for data transmission.

In a fifth aspect, the present disclosure relates to an interference avoidance apparatus, including:
a receiving module, configured to receive disabling information from a communication device, the disabling information including an interference frequency band, and the disabling information being used for instructing a user terminal to disable the interference frequency band for data transmission;
a determination module, configured to determine whether the interference frequency band is being used for data transmission; and
a pause module, configured to pause the data transmission when it is determined that the interference frequency band is being used for data transmission.

In a sixth aspect, the present disclosure relates to an electronic devices, including:
a processor, a memory, and a communication bus, where the processor and memory communicate with each other through the communication bus;
the memory is configured to store a computer program; and
the processor is configured to execute the program stored in the memory to implement the interference avoidance method of the present disclosure.

In a seventh aspect, the present disclosure relates to a computer-readable storage medium storing a computer program, where the interference avoidance method described in the present disclosure is implemented when the computer program is executed by a processor.

In some embodiments, the method provided in the present disclosure can determine the interference frequency band that interferes with the frequency band used by the communication device to transmit data, and control the user terminal communicating with the communication device to disable the interference frequency band for data transmission, thereby avoiding the interference caused by the fact that the user terminal uses the interference frequency band to transmit data to the data transmission by the communication device, and improving the reliability of data transmission by the communication device. For example, when the communication device makes an emergency call, the solution disclosed in the present disclosure can control the user terminal to avoid a coherent frequency band where the emergency call is being made, thereby avoiding radio frequency interference from the user terminal to the emergency call, improving the quality and success rate of the emergency call, ensuring the timeliness and reliability of the emergency call, and improving the efficiency of rescue.

### BRIEF DESCRIPTION OF THE DRAWINGS

The accompanying drawings herein are incorporated into the specification and constitute a part of the specification, illustrate embodiments that conform to the present disclosure, and are used together with the specification to explain the principle of the present disclosure.

In order to describe the technical solutions of the embodiments of the present disclosure more clearly, a brief introduction will be provided below to the accompanying drawings required for the embodiments. Apparently, those of ordinary skill in the art can derive other drawings from the accompanying drawings without any creative efforts.
Fig. 1 is a schematic flowchart of an interference avoidance method according to an embodiment of the present disclosure;
Fig. 2 is a schematic flowchart of an interference avoidance method according to an embodiment of the present disclosure;
Fig. 3 is a schematic structural diagram of an interference avoidance apparatus according to an embodiment of the present disclosure;
Fig. 4 is a schematic structural diagram of an interference avoidance apparatus according to an embodiment of the present disclosure;
Fig. 5 is a schematic structural diagram of an interference avoidance system according to an embodiment of the present disclosure;
Fig. 6 is a schematic flowchart of an interference avoidance system according to an embodiment of the present disclosure; and
Fig. 7 is a schematic structural diagram of an electronic device according to an embodiment of the present disclosure.

### DETAILED DESCRIPTION

In order to make the objectives, technical solutions, and advantages of the embodiments of the present disclosure clearer, the following clearly and completely describes the technical solutions in the embodiments of the present disclosure with reference to the accompanying drawings therein. Apparently, the described embodiments are some but not all of the embodiments of the present disclosure. All other embodiments obtained by those of ordinary skill in the art based on the embodiments of the present disclosure without any creative efforts shall fall within the scope of protection of the present disclosure.

Because the devices such as mobile phones carried by the driver and passengers use a frequency band related to a car's emergency call, an interference may be produced to the emergency call, resulting in decreased voice quality or transmission failure of location information.

The method provided in the embodiments of the present disclosure may be applied to an electronic device, the electronic device may be a module capable of communication or a terminal device including such a module, and the terminal device may be a mobile terminal or a smart terminal. The mobile terminal may be at least one of a mobile phone, a tablet, a laptop, and the like; the smart terminal may be a terminal including a wireless communication module, such as a smart car, a smart watch, a shared bicycle, or a smart cabinet; and the module may be any of wireless communication modules, such as a 2G communication module, a 3G communication module, a 4G communication module, a 5G communication module, or an NB-IOT communication module.

It should be understood that the communication device in the embodiments of the present disclosure may be any of the above electronic devices, and similarly, the user terminal in the embodiments of the present disclosure may also be any of the above electronic devices.

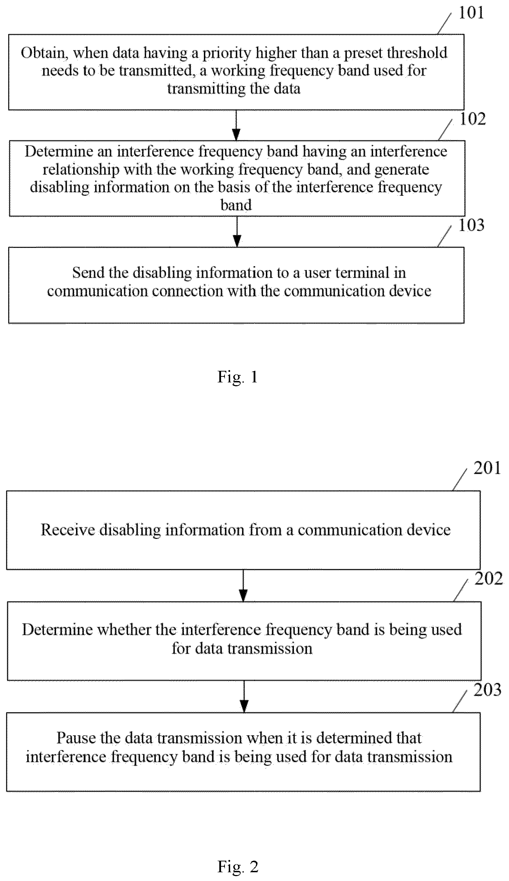

As shown in Fig. 1, an embodiment of the present disclosure provides an interference avoidance method applied to a communication device. The method may include the following steps:
Step 101: Obtain, when data having a priority higher than a preset threshold needs to be transmitted, a working frequency band used for transmitting the data;
Step 102: Determine an interference frequency band having an interference relationship with the working frequency band, and generate disabling information on the basis of the interference frequency band; and
Step 103: Send the disabling information to a user terminal in communication connection with the communication device, the disabling information including the interference frequency band, and the disabling information being used for instructing the user terminal to disable the interference frequency band for data transmission.

In some embodiments, the priorities of different data transmitted by the communication device may be determined in advance on the basis of the requirements for timeliness and reliability of the data. For example, for data such as emergency calls, this type of data requires high timeliness and reliability, which directly affect the efficiency of rescue, so this type of data may be set as a high priority. For another example, for data transmitted by Bluetooth, this type of data is usually not urgent and requires low timeliness and reliability, so this type of data may be set as a low priority.

In some embodiments, the preset threshold may be set according to an actual situation.

In some embodiments, the working frequency band used for transmitting the data may be obtained by the following way.

When an emergency call needs to be made, the working frequency band used for transmitting the data is obtained. Understandably, according to actual needs, when data is transmitted by Bluetooth, the working frequency band used for transmitting the data by Bluetooth may be obtained; or when data is transmitted by WIFI, the working frequency band used for transmitting the data by WIFI may be obtained. This embodiment does not limit the way.

In some embodiments, when the communication device transmits data having a priority not higher than the preset threshold, the working frequency band used for transmitting the data by the communication device is not obtained.

In some embodiments, the communication device is a vehicle device as an example. When the vehicle encounters a serious accident, the vehicle device automatically makes an emergency call. According to the timeliness and reliability of data transmission, the preset threshold may be set as a priority when the vehicle makes an ordinary call. When it is determined that the communication module is making a non-ordinary call, namely, an emergency call, the working frequency band used for making the emergency call is obtained.

In this embodiment, the interference frequency band of the working frequency band refers to a frequency band that overlaps with the working frequency band at least. That is, the working frequency band may fully include the interference frequency band, or a portion of the interference frequency band belongs to a portion of the working frequency band.

For ease of understanding, an example is provided here. When the working frequency band used by the user terminal is 2401 to 2423 GHz, and the working frequency band used for transmitting the data by the communication device is 2406 to 2428 GHz, there is an overlapping frequency band of 2406 to 2423 GHz, which leads to an interference relationship.

In some embodiments, the interference frequency band having the interference relationship with the working frequency band may be determined as follows.

The communication device maintains a preset frequency band interference table, the preset frequency band interference table is queried to obtain a target frequency band according to the working frequency band used when the communication device transmits the data having the priority higher than the preset threshold, and the obtained target frequency band is used as the interference frequency band.

In some embodiments, different frequency bands applicable to the transmission of data by the communication device may be obtained in advance from a communication protocol of the communication device, and a frequency band interference table is generated on the basis of these frequency bands. Therefore, the frequency band interference table includes at least one frequency band.

In some embodiments, the target frequency band includes the working frequency band used when the communication device transmits the data having the priority higher than the preset threshold; or a portion of the target frequency band belongs to the working frequency band used when the communication module transmits the data having the priority higher than the preset threshold.

In some embodiments, the communication device may communicate with the user terminal in a wired or wireless manner. In applications, wireless connections may be Bluetooth or WIFI, and wired connections may be USB or the like, which are not limited here.

In some embodiments, the communication device is a vehicle device as an example. In order to prevent the communication of the user terminal from being affected to affect user experience due to continued disabling of the interference frequency band for data transmission by the user terminal after the vehicle's emergency call ends, enabling information may be sent to the user terminal communicating with the communication device after it is determined that the communication device has completed the transmission of data having a priority higher than the preset threshold in this embodiment. The enabling information includes the interference frequency bands and is used for instructing the user terminal to restore data transmission over the interference frequency band.

In some embodiments, when it is determined that the communication device needs to transmit data having a priority higher than the preset threshold, the working frequency band used for transmitting the data is obtained, the interference frequency band having an interference relationship with the working frequency band is determined, and disabling information is generated on the basis of the interference frequency band; and the disabling information is sent to the user terminal communicating with the communication device. In this embodiment, when it is determined that the communication device needs to transmit data having a priority higher than the preset threshold, the disabling information is sent to the user terminal communicating with the communication device, to control the user terminal to disable the interference frequency band used for transmitting data by the communication device. When it is determined that the data having the priority higher than the preset threshold, transmitted by the communication device, is about making a vehicle's emergency call, the user terminal is controlled to disable the interference frequency band for data transmission, thereby avoiding the interference produced by the user terminal using the interference frequency band, improving the quality and success rate of the emergency call, ensuring the timeliness and reliability of the emergency call, and improving the efficiency of seeking assistance. After the emergency call ends, the enabling information is sent to the user terminal to remove interference, thereby avoiding affecting the quality of data transmission by the user terminal after the vehicle's emergency call, and obtaining better user experience.

As shown in Fig. 2, an embodiment of the present disclosure provides an interference avoidance method applied to a user terminal, including the following steps:
Step 201: Receive disabling information from a communication device, the disabling information including an interference frequency band, and the disabling information being used for instructing the user terminal to disable the interference frequency band for data transmission;
Step 202: Determine whether the interference frequency band is being used for data transmission; and
Step 203: Pause the data transmission when it is determined that the interference frequency band is being used for data transmission.

In order not to affect the operation of the user terminal, the user terminal may further receive enabling information from the communication device after receiving the disabling information, so as to release the user terminal's disabling of the interference frequency band.

In some embodiments, the user terminal is connected to the communication device in a wired or wireless manner. After receiving the disabling information, if the user terminal is using the interference frequency band that interferes with an emergency call for a voice call, the user terminal needs to interrupt the voice call.

If the user terminal is using the interference frequency band that interferes with the emergency call for data upload/download, the user terminal pauses the data upload/download. Understandably, in order not to affect data upload/download, the user terminal may switch the frequency band to another one to restore data upload/download after pausing the interference frequency band for data upload/download.

In addition, after disabling the interference frequency band for data transmission, the user terminal may receive enabling information from the communication device, and the user terminal is controlled to enable the interference frequency band for data transmission and restore using the interference frequency band for data transmission. The communication of the user terminal is prevented from being affected again to affect user experience.

In some embodiments, disabling information is received from the communication device, whether the user terminal is using the interference frequency band for data transmission is determined, and when it is determined that the user terminal is using the interference frequency band for data transmission, the use of the interference frequency band for data transmission by the user terminal is paused. And, enabling information is received from the communication module, and the user terminal is controlled to enable the interference frequency band for data transmission and restore using the interference frequency band for data transmission. Notably, according to actual needs, when the disabling information from the communication device is about a vehicle's emergency call, the user terminal is controlled to disable the interference frequency band for data transmission, thereby avoiding the interference to the vehicle's emergency call when the user terminal uses the interference frequency band, improving the quality and success rate of the emergency call, ensuring the timeliness and reliability of the emergency call, and improving the efficiency of rescue. After the emergency call ends, the user terminal restores using the interference frequency band, thereby avoiding affecting the communication quality of the user terminal again after the vehicle's emergency call, and obtaining better user experience.

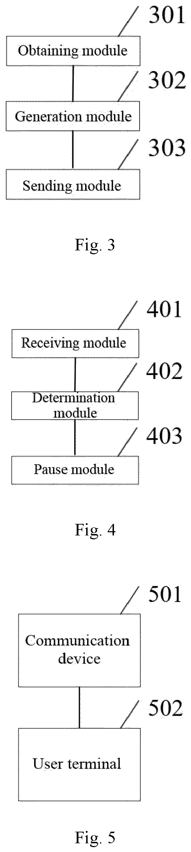

An embodiment of the present disclosure provides an interference avoidance apparatus applied to a communication device. The implementation of the apparatus may refer to the description of the method embodiment of the present disclosure, and repeated parts will not be described again. As shown in Fig. 3, the apparatus includes:
an obtaining module 301, configured to obtain, when data having a priority higher than a preset threshold needs to be transmitted, a working frequency band used for transmitting the data;
a generation module 302, configured to determine an interference frequency band having an interference relationship with the working frequency band, and generate disabling information on the basis of the interference frequency band; and
a sending module 303, configured to send the disabling information to a user terminal communicating with the communication device, the disabling information being used for instructing the user terminal to disable the interference frequency band for data transmission.

In some embodiments, the obtaining module 301 is configured to:
obtain a target frequency band from a preset frequency band interference table, the target frequency band including the working frequency band, or a portion of the target frequency band belonging to the working frequency band. The target frequency band is used as the interference frequency band.

In some embodiments, the generation module 302 is configured to:
obtain the working frequency band used for transmitting the data when an emergency call needs to be made.

In some embodiments, the apparatus is further configured to:
send enabling information to the user terminal after sending the disabling information to the user terminal in communication connection with the communication device and determining that the communication device has completed the transmission of the data having the priority higher than the preset threshold, the enabling information including the interference frequency band, and the enabling information being used for instructing the user terminal to restore using the interference frequency band for data transmission.

An embodiment of the present disclosure further provides an interference avoidance apparatus applied to a user terminal. The implementation of the apparatus may refer to the description of the method embodiment of the present disclosure, and repeated parts will not be described again. As shown in Fig. 4, the apparatus includes:
a receiving module 401, configured to receive disabling information from a communication device, the disabling information including an interference frequency band, and the disabling information being used for instructing the user terminal to disable the interference frequency band for data transmission;
a determination module 402, configured to determine whether the interference frequency band is being used for data transmission; and
a pause module 403, configured to pause the data transmission when it is determined that the interference frequency band is being used for data transmission.

In some embodiments, the apparatus is configured to:
receive enabling information from the communication device, the enabling information including the interference frequency band. The enabling information is used for instructing the user terminal to restore using the interference frequency band for data transmission.

An embodiment of the present disclosure further provides an interference avoidance system, as shown in Fig. 5, including:
a communication device 501 and a user terminal 502;
where the communication device 501 is configured to obtain, when data having a priority higher than a preset threshold needs to be transmitted, a working frequency band used for transmitting the data; determine an interference frequency band having an interference relationship with the working frequency band, and generate disabling information on the basis of the interference frequency band; and send the disabling information to the user terminal 502 in communication connection with the communication device 501, the disabling information being used for instructing the user terminal 502 to disable the interference frequency band for data transmission; and
the user terminal 502 is configured to receive the disabling information from the communication device 501, the disabling information including the interference frequency band, and the disabling information being used for instructing the user terminal 502 to disable the interference frequency band for data transmission; determine whether the interference frequency band is being used for data transmission; and pause the data transmission when it is determined that the interference frequency band is being used for data transmission.

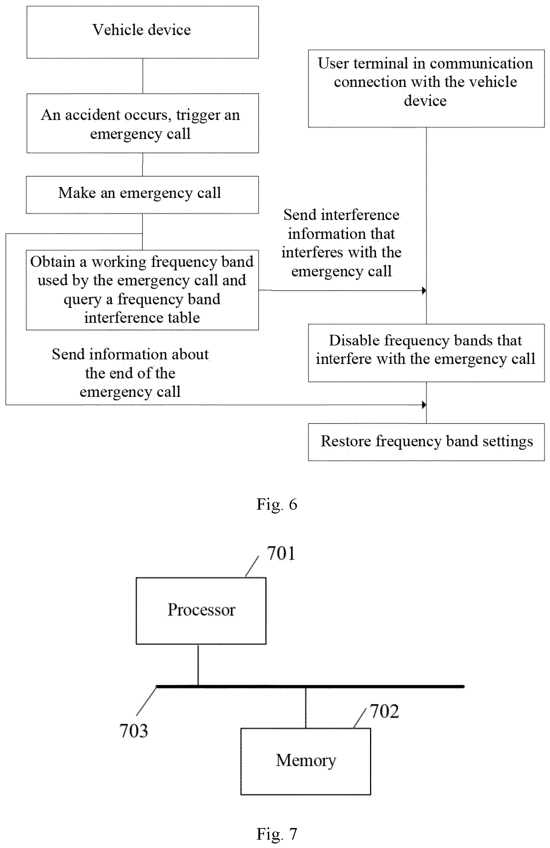

In some embodiments, as shown in Fig. 6, the communication device may be a vehicle device in communication connection with a user terminal. When the vehicle encounters a serious accident, the vehicle device is triggered to make an emergency call, obtain a working frequency band used by the emergency call, then query in a frequency band interference table all interference frequency bands that interfere with the emergency call, use the interference frequency bands as disabling information, and send the disabling information to the user terminal. When the user terminal receives the disabling information, the user terminal connected to the vehicle device pauses using the interference frequency bands. After the emergency call ends, the vehicle device sends information about the end of the emergency call to the user terminal connected thereto, and the user terminal connected to the vehicle device receives the information about the end of the emergency call and restores using the interference frequency bands for data transmission.

The present disclosure further provides an electronic device. As shown in Fig. 7, the electronic device includes a processor 701, a memory 702, and a communication bus 703. The processor 701 and the memory 702 communicate with each other through the communication bus 703. The memory 702 stores a program executable by the processor 701, and the processor 701 executes the program stored in the memory 702 to implement the following steps:
obtaining, when data having a priority higher than a preset threshold needs to be transmitted, a working frequency band used for transmitting the data; determining an interference frequency band having an interference relationship with the working frequency band, and generating disabling information on the basis of the interference frequency band; and sending the disabling information to a user terminal in communication connection with a communication device, the disabling information being used for instructing the user terminal to disable the interference frequency band for data transmission;
   or
receiving disabling information from a communication device, the disabling information including an interference frequency band, and the disabling information being used for instructing a user terminal to disable the interference frequency band for data transmission; determining whether the interference frequency band is being used for data transmission; and when it is determined that the interference frequency band is being used for data transmission, pausing the data transmission.

The communication bus 703 mentioned in the aforementioned electronic devices may be a peripheral component interconnect (PCI) bus or an extended industry standard architecture (EISA) bus. The communication bus 703 may be categorized as an address bus, a data bus, a control bus, or the like. For ease of representation, only one bold line is used to represent the bus in Fig. 7, but this does not mean that there is only one bus or only one type of bus.

The memory 702 may be a random access memory (RAM) or a non-volatile memory, such as at least one disk storage. In some embodiments, the memory may be at least one storage apparatus away from the aforementioned processor 701.

The processor 701 may be a general-purpose processor, including a central processing unit (CPU), a network processor (NP), or the like, or may be a digital signal processor (DSP), an application specific integrated circuit (ASIC), a field-programmable gate array (FPGA), or other programmable logical devices, discrete gates, transistor logical devices, or discrete hardware components.

In one embodiment of the present disclosure, a computer-readable storage medium is further provided, which stores a computer program that, when run on a computer, enables the computer to perform the interference avoidance method of the present disclosure.

All or some of the foregoing embodiments may be implemented by software, hardware, firmware, or any combination thereof. When software is used to implement the embodiments, the embodiments may be implemented completely or partially in a form of a computer program product. The computer program product includes one or more computer instructions. When the computer instructions are loaded and executed on the computer, the processes or functions described in the embodiments of the present disclosure are produced completely or partially. The computer may be a general-purpose computer, a dedicated computer, a computer network, or other programmable apparatuses. The computer instructions may be stored in the computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, optical fiber, or digital subscriber line (DSL)) or wireless (such as infrared or microwave) manner. The computer-readable storage medium may be any available medium accessible by the computer, or a data storage device, such as a server or data center integrating one or more available media. The available medium may be a magnetic medium (such as a floppy disk, hard disk, or magnetic tape), an optical medium (such as a DVD), a semiconductor medium (such as a solid state disk), or the like.

It should be noted that the relational terms herein, such as "first" and "second", are merely used for distinguishing one entity or operation from another, and do not necessarily require or imply that any actual relationship or sequence exists between these entities or operations. Moreover, the terms "include", "comprise", and any variants thereof are intended to cover a non-exclusive inclusion, so that a process, method, article, or device including a series of elements not only includes those elements, but also includes other elements not listed explicitly, or includes inherent elements of the process, method, article, or device. In the absence of more limitations, an element defined by "include a..." does not exclude other same elements existing in the process, method, article, or device including the element.

Described above are merely specific implementations of the present disclosure, which enable those skilled in the art to understand or implement the present disclosure. Various modifications to these embodiments are obvious to those skilled in the art, and the general principles defined herein may be implemented in other embodiments without departing from the spirit or scope of the present disclosure. Therefore, the present disclosure will not be limited to the embodiments described herein, but will conform to the widest scope consistent with the principles and novel features disclosed herein.

## Claims

1. An interference avoidance method applied to a communication device, comprising:
obtaining, when data having a priority higher than a preset threshold needs to be transmitted, a working frequency band used for transmitting the data;
determining an interference frequency band having an interference relationship with the working frequency band, and generating disabling information on the basis of the interference frequency band; and
sending the disabling information to a user terminal in communication connection with the communication device, the disabling information being used for instructing the user terminal to disable the interference frequency band for data transmission.

2. The interference avoidance method according to claim 1, wherein the obtaining, when data having a priority higher than a preset threshold needs to be transmitted, a working frequency band used for transmitting the data comprises:
obtaining the working frequency band used for transmitting the data when an emergency call needs to be made.

3. The interference avoidance method according to claim 1 or 2, wherein the determining an interference frequency band having an interference relationship with the working frequency band comprises:
obtaining a target frequency band from a preset frequency band interference table, the target frequency band comprising the working frequency band, or a portion of the target frequency band belonging to the working frequency band; and
using the target frequency band as the interference frequency band.

4. The interference avoidance method according to any one of claims 1 to 3, wherein after the step of sending the disabling information to a user terminal in communication connection with the communication device, the method further comprises:
sending enabling information to the user terminal after completing the transmission of the data having the priority higher than the preset threshold, the enabling information comprising the interference frequency band, and the enabling information being used for instructing the user terminal to restore using the interference frequency band for data transmission.

5. An interference avoidance method applied to a user terminal, comprising:
receiving disabling information from a communication device, the disabling information comprising an interference frequency band, and the disabling information being used for instructing the user terminal to disable the interference frequency band for data transmission;
determining whether the interference frequency band is being used for data transmission; and
pausing the data transmission when it is determined that the interference frequency band is being used for data transmission.

6. The interference avoidance method according to claim 5, further comprising:
receiving enabling information from the communication device, the enabling information comprising the interference frequency band, and the enabling information being used for instructing the user terminal to restore using the interference frequency band for data transmission; and
restoring using the interference frequency band for data transmission.

7. An interference avoidance system, comprising:
a communication device and a user terminal;
wherein the communication device is configured to obtain, when data having a priority higher than a preset threshold needs to be transmitted, a working frequency band used for transmitting the data; determine an interference frequency band having an interference relationship with the working frequency band, and generate disabling information on the basis of the interference frequency band; and send the disabling information to the user terminal in communication connection with the communication device, the disabling information being used for instructing the user terminal to disable the interference frequency band for data transmission; and
the user terminal is configured to receive the disabling information from the communication device, the disabling information comprising the interference frequency band, and the disabling information being used for instructing the user terminal to disable the interference frequency band for data transmission; determine whether the interference frequency band is being used for data transmission; and pause the data transmission when it is determined that the interference frequency band is being used for data transmission.

8. An interference avoidance apparatus, comprising:
an obtaining module, configured to obtain, when data having a priority higher than a preset threshold needs to be transmitted, a working frequency band used for transmitting the data;
a generation module, configured to determine an interference frequency band having an interference relationship with the working frequency band, and generate disabling information on the basis of the interference frequency band; and
a sending module, configured to send the disabling information to a user terminal in communication connection with the communication device, the disabling information being used for instructing the user terminal to disable the interference frequency band for data transmission.

9. An interference avoidance apparatus, comprising:
a receiving module, configured to receive disabling information from a communication device, the disabling information comprising an interference
frequency band, and the disabling information being used for instructing a user terminal to disable the interference frequency band for data transmission;
a determination module, configured to determine whether the interference frequency band is being used for data transmission; and
a pause module, configured to pause the data transmission when it is determined that the interference frequency band is being used for data transmission.

10. An electronic device, comprising a processor, a memory, and a communication bus, wherein the processor and the memory communicate with each other through the communication bus;
wherein the memory is configured to store a computer program; and
the processor is configured to execute the program stored in the memory to implement the interference avoidance method according to any of claims 1 to 4 or the interference avoidance method according to claim 5 or 6.

11. A computer-readable storage medium, storing a computer program, wherein the interference avoidance method according to any of claims 1 to 4 or the interference avoidance method according to claim 5 or 6 is implemented when the computer program is executed by a processor.
